# EUROPÄISCHE PATENTSCHRIFT

(11) **EP 2 616 697 B1**
(45) Veröffentlichungstag und Bekanntmachung des Hinweises auf die Patenterteilung: **11.02.2015**
(21) Anmeldenummer: 11801565.0
(22) Anmeldetag: 13.09.2011
(51) Int. Cl.: F16C 29/10, F16C 29/06, F16D 63/00, F16D 65/14, F16D 121/04, F16D 121/20, F16D 121/22, F16D 125/66, F16D 127/00, F16D 121/06

(54) **VORRICHTUNG MIT HINTEREINANDER GESCHALTETEN SCHIEBEKEILGETRIEBEN**
DEVICE HAVING SLIDING WEDGE TRANSMISSIONS CONNECTED ONE BEHIND THE OTHER
DISPOSITIF DOTÉ D'ENGRENAGES À CLAVETTE COULISSANTE BRANCHÉS LES UNS DERRIÈRE LES AUTRES

(30) Priorität: 13.09.2010 DE 102010045109
(43) Veröffentlichungstag der Anmeldung: 24.07.2013
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2011/001724
(87) Internationale Veröffentlichungsnummer: WO 2012/041275

(56) Entgegenhaltungen:
- DE-A1- 10 225 353
- DE-A1-102005 016 723
- US-A- 3 986 584
- US-A1- 2005 183 907

## Beschreibung

Die Erfindung betrifft eine Vorrichtung zum Bremsen, Klemmen oder Greifen mit mindestens einem eine Hubbewegung erzeugenden Antrieb, wobei der Antrieb mindestens eine Antriebsvorrichtung und mindestens zwei in einem Gehäuse angeordnete Schiebekeilgetriebe umfasst und wobei das erste Schiebekeilgetriebe eine Wegübersetzung hat, die kleiner ist als die Wegübersetzung des zweiten Schiebekeilgetriebes.

Aus der DE 10 2010 018 183 A1 ist eine Vorrichtung mit zwei Schiebekeilgetrieben bekannt. Beide Schiebekeilgetriebe sind parallel zueinander angeordnet. Jedes Getriebe wird mit Hilfe eines eigenen Antriebs angetrieben.

Der vorliegenden Erfindung liegt die Problemstellung zugrunde, eine Vorrichtung zu entwickeln, die bei einem kleinen Antriebshub und großen Klemmkräften einen einfachen und Bauraum sparenden Aufbau hat und zudem dauerhaft wartungsarm ist.

Diese Problemstellung wird mit den Merkmalen des Anspruchs 1 gelöst. Dabei besteht das erste Schiebekeilgetriebe aus einem Folgekeil und einem Schrägdruckstück . Der Folgekeil stützt sich in Einkeilrichtung federbelastet am Gehäuse ab. Das zweite Schiebekeilgetriebe umfasst einen zwischen einem Stützelement und dem Folgekeil in Einkeilrichtung bewegbaren Antriebskeil. Der Antriebskeil kontaktiert den Folgekeil direkt oder über mindestens einen in einem Käfig geführten Wälzkörper. Während der Relativbewegung von Folgekeil und Schrägdruckstück ist der Hub des Folgekeils durch einen am Antriebskeil oder bei der Verwendung des Käfigs durch einen am Käfig, der anschlagsbedingt den Antriebskeil in Einkeilrichtung nicht überholen kann, angeordneten Anschlag begrenzt.

Innerhalb der Vorrichtung hat das erste Getriebe - zur Erzeugung einer reinen Zustellbewegung - eine kleine Übersetzung, während das zweite Getriebe - zur Erzeugung einer großen Brems-, Klemmoder Greifkraft - eine um mindestens 33 Prozent größere Übersetzung hat. Beide Getriebe sind durch einen einzigen Antrieb betätigbar.

Beim Betätigen der Vorrichtung beginnt die kraftbelastete Brems-, Klemm- oder Greifbewegung erst dann, wenn das erste Schiebekeilgetriebe die entsprechenden Brems-, Klemm- oder Greifelemente an die zu bremsenden, zu klemmenden oder zu greifenden Objekte spielfrei oder zumindest nahezu spielfrei angelegt hat.

In den Ausführungsbeispielen werden als Getriebe unterschiedliche Schiebekeilgetriebe verwendet. Zur Umsetzung der verschiedenen Übersetzungen erhält das erste Schiebekeilgetriebe einen großen Keilwinkel, während in das zweite Getriebe ein Schiebekeil eingebaut wird, der einen kleineren Keilwinkel aufweist. Durch die Keilgetriebe wird die Antriebskraft der entsprechenden Antriebsvorrichtung, z.B. einer Zylinder-Kolben-Einheit, eines Elektromagneten oder eines Elektromotors, durch die entsprechende Übersetzung verstärkt. Das Ausführungsbeispiel gewährleistet bei einem Antriebskraft von 60 N und einem Hub von ca. 10 mm eine Haltekraft von mindestens 680 N bei einem getriebeseitigen Gleitreibwert von 0,1.

Ein Antrieb einer anderen Vorrichtung besteht z.B. aus einer Zylinder-Kolben-Einheit, die über Zahnstangen zwei Exzenterscheiben schwenken anstatt zwei oder mehr Keile zu verschieben. Die Exzenterscheiben wirken dann z.B. auf die Teile einer Klemmung. Das erste Getriebe hat eine Exzenterscheibe mit großer Steigung, während das zweite Getriebe mit einer Exzenterscheibe kleinerer Steigung auskommt.

Weitere Einzelheiten der Erfindung ergeben sich aus den Unteransprüchen und der nachfolgenden Beschreibung mindestens einer schematisch dargestellten Ausführungsform.
- Figur 1:: Perspektivische Ansicht einer Klemmvorrichtung mit zwei Keilgetrieben und einer Rastmechanik;
- Figur 2:: vergrößerte Ansicht von zwei Keilgetrieben und einer Rastmechanik, ungeklemmt;
- Figur 3:: wie Figur 2, jedoch geklemmt;
- Figur 4:: Käfig des zweiten Schiebekeilgetriebes;
- Figur 5:: horizontaler Längsschnitt durch die Schiebekeilgetriebe und das Reibgehemme, ungeklemmt;
- Figur 6:: wie Figur 5, jedoch vorgeklemmt;
- Figur 7:: wie Figur 6, jedoch geklemmt;
- Figur 8:: Schnitt durch schematisch dargestellte Schiebekeilgetriebe in Gleitpaarung in drei Positionen
- Figur 9:: Schnitt durch schematisch dargestellte Schiebekeilgetriebe mit einer Gleitpaarung und einer Wälzpaarung in drei Positionen
- Figur 10:: Schnitt durch schematisch dargestellte Schiebekeilgetriebe in Gleitpaarung in drei Positionen
- Figur 11:: Rückansicht der Vorrichtung mit Führungsschiene;
- Figur 12:: vertikaler Längsschnitt der Vorrichtung in geklemmter Position;
- Figur 13:: wie Figur 12, jedoch während des Lösens der Rastmechanik;
- Figur 14:: Draufsicht auf den Kulissenkanal der Rastmechanik nach den Figuren 2 und 3;
- Figur 15:: Draufsicht auf einen Kulissenkanal mit anderer Rastbahn;
- Figur 16:: perspektivische Draufsicht auf eine Klemmvorrichtung mit einem Querschieber als Koppelelement.

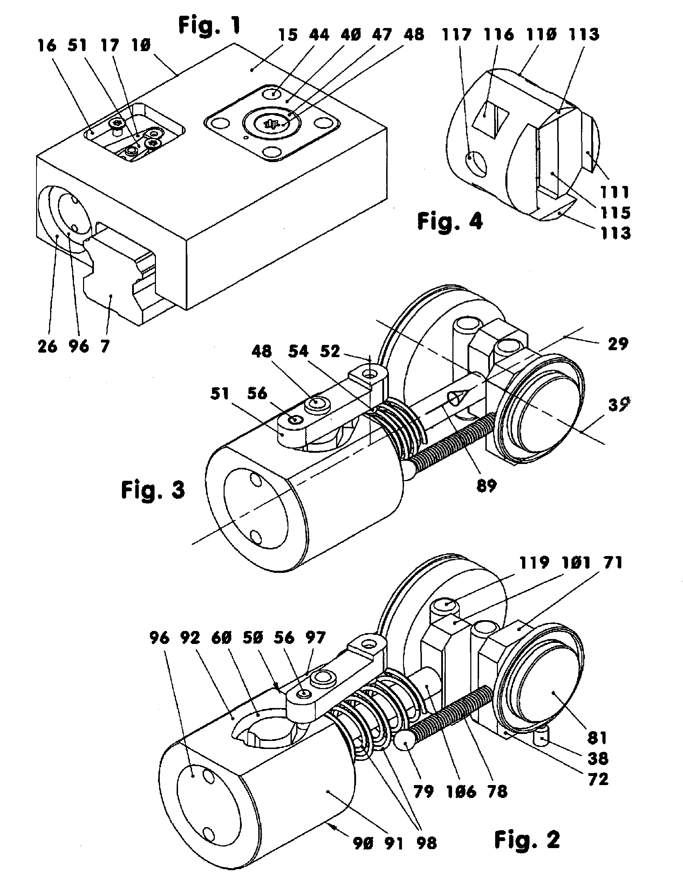

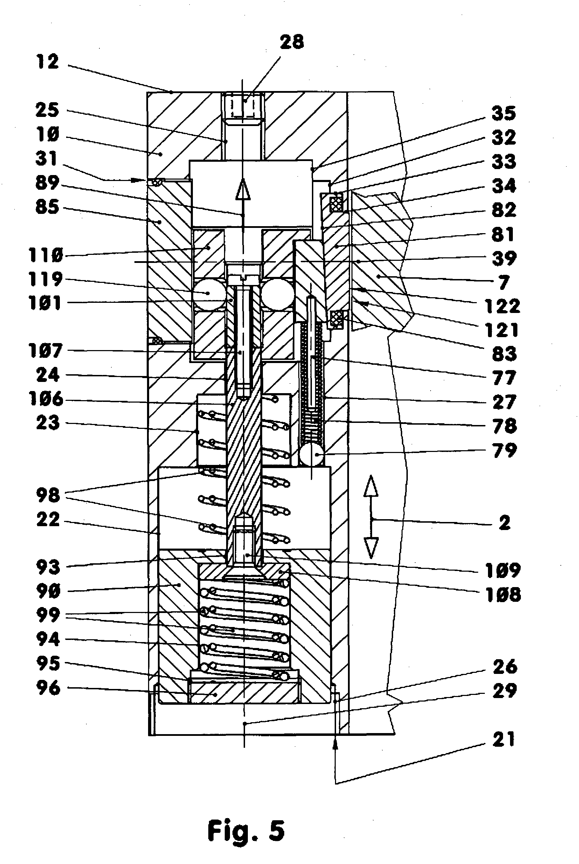

Die Figur 1 zeigt eine Klemm- und/oder Bremsvorrichtung, dessen Reibgehemme (121, 131), vgl. Figur 5, mittels eines Antriebes betätigbar ist. Die Vorrichtung umgreift mit ihrem c-förmigen Grundkörper (10) eine Führungsschiene (7). Im Grundkörper (10) bzw. im Gehäuse befinden sich zwischen einer adaptierbaren - hier nicht dargestellten - Antriebsvorrichtung und dem Reibgehemme (121, 131) zwei hintereinander geschaltete Schiebekeilgetriebe (70, 100). Die Schiebekeilgetriebe (70, 100) sind mittels einer Rastmechanik (50), in Form eines bistabilen Formrichtgesperres, mechanisch in einer geklemmten und einer ungeklemmten Position gesichert.

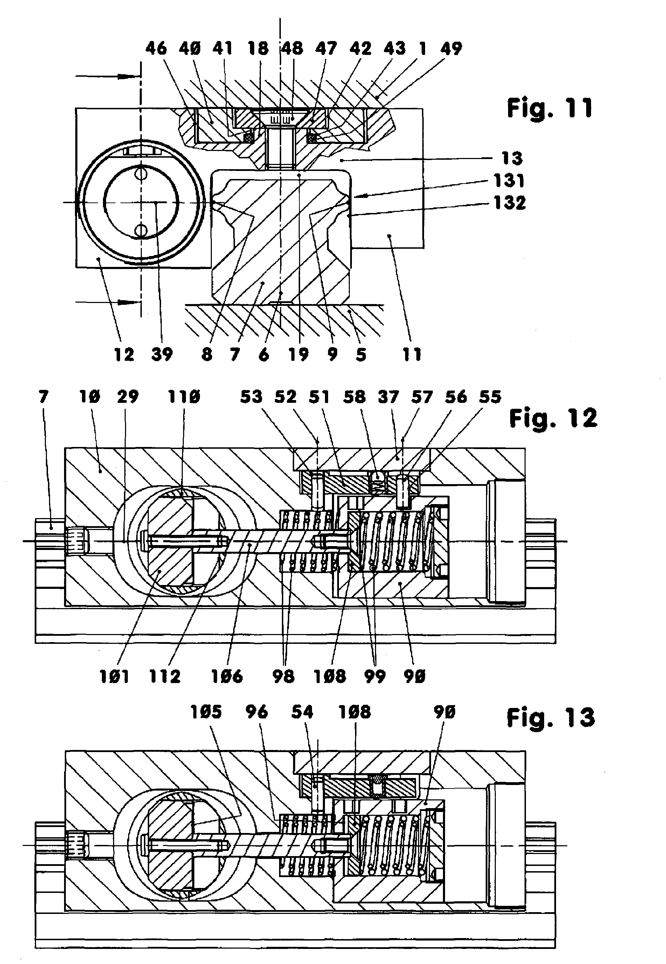

Zur Befestigung einer Antriebsvorrichtung am Grundkörper (10) weist dieser in der Nähe seiner rückwärtigen Stirnwand z.B. ein Feingewinde (26) auf. Das Gehäuse (10) ist in Figur 1 ohne einen Deckel (37), vgl. Figur 12, dargestellt, um die Anordnung des Reibgesperres zu zeigen.

Die Vorrichtung ist über den Grundkörper (10) an einem Maschinenschlitten (1) befestigt, der an der Führungsschiene (7) abgebremst oder geklemmt werden soll, vgl. Figur 11. Die doppelprismatische Führungsschiene (7) verläuft parallel zur Schlittenbewegungsrichtung bzw. zur Führungslängsrichtung (2).

Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Die Führungsschiene (7) kontaktiert über ihre Bodenfläche z.B. das sie tragende Maschinenbett (5).

Die Führungsschiene (7) hat oberhalb der v-förmigen Nut u.a. zwei Nebenflächen (8, 9), die sich - bezogen auf die vertikale Mittenlängsebene (6) - spiegelbildlich gegenüber liegen. Beide Nebenflächen (8, 9) sind zueinander parallel ausgerichtet. Sie dienen den Reibbacken (122, 132) als Anlageflächen. Bei der vorliegenden Variante kann die rechte Reibbacke (132), also die, die in der Gehäusezone (11) liegt, auch weggelassen werden.

Der z.B. einteilige, aus 16 MnCr 5 gefertigte Grundkörper (10) ist im Wesentlichen ein quaderförmiges Bauteil, das an seiner Unterseite eine zentrale Nut (19) mit einem z.B. rechteckigen Querschnitt aufweist. In die Nut (19) taucht die Führungsschiene (7) nach Figur 11 zu ca. drei Vierteln ein. Der Grundkörper (10) hat beispielsweise folgende Abmessungen: 78 mm x 59 mm x 28 mm.

Das Gehäuse (10) hat eine rechte (11) und eine linke Gehäusezone (12). Beide Zonen (11, 12) befinden sich unterhalb einer Flanschzone (13).

In der Flanschzone (13) des Gehäuses (10) ist u.a. ein plattenförmiger, großflächiger Vorrichtungsträger (40) gelagert, vgl. Figuren 1 und 11. Er besteht aus einer rechteckigen oder quadratischen Platte, die in den Bereichen ihrer Ecken je eine Gewindebohrung (44) zur Befestigung am Maschinenschlitten (1) aufweist. Mittig ist in die Platte von oben her eine Durchgangsbohrung (41) mit einer großen Zylindersenkung (42) eingearbeitet, in der eine Scheibe (47) platziert ist, die z.B. mittels einer Senkschraube (48) am Gehäuse (10) befestigt ist. An der Unterseite des Vorrichtungsträgers (40) ist, um die zentrale Durchgangsbohrung (41) herum, eine kleinere Zylindersenkung (43) zur Aufnahme eines ring- bzw. torusförmigen Elastomerkörpers (49) angeordnet.

Der Vorrichtungsträger (40) sitzt in einer rechteckigen Ausnehmung (46) des Gehäuses (10). Im Zentrum der Ausnehmung (46) befindet sich ein zentraler, aufgebohrter Zapfen (18) mit planer Stirnfläche und Innengewinde. Der Außendurchmesser des Zapfens (18) ist z.B. 2 mm kleiner als der Innendurchmesser der zentralen Durchgangsbohrung (41) an ihrer engsten Stelle. Zwischen dem Zapfen (18) und der kleineren Zylindersenkung (43) ist der Elastomerkörper (49) eingeklemmt. Der Außendurchmesser der Scheibe (47) ist ebenfalls z.B. 2 mm kleiner als der Innendurchmesser der großen Zylindersenkung (42) der Platte.

Der Vorrichtungsträger (40) hat in der Ausnehmung (46) in Klemmrichtung (3) ein Spiel von z.B. 2 mm. In Führungslängsrichtung (2) ist das Spiel gerade so groß, dass sich der Vorrichtungsträger (40) in Klemmrichtung (3) noch ohne Klemmen verschieben lässt. Der zwischen dem Vorrichtungsträger (40) und dem Gehäuse (10) angeordnete Elastomerkörper (49) drückt den Vorrichtungsträger (40) mit dem planen Grund der Zylindersenkung (42) gegen die ebenfalls plane Unterseite der Scheibe (47), sodass der Vorrichtungsträger (40) ca. 0,1 bis 0,5 mm über das Niveau der Oberseite des Gehäuses (10) übersteht.

Nach den Figuren 5 bis 7 weist die linke Gehäusezone (12) z.B. zum Adaptieren einer Antriebsvorrichtung, zur Aufnahme der Schiebekeilgetriebe (70, 100) und des Formrichtgesperres (50) eine mehrstufige Stufenbohrung (21) auf, deren Mittellinie (29) parallel zur Führungslängsrichtung (2) orientiert ist, vgl. Figur 5. Die Stufenbohrung (21) setzt sich aus einer Zylinderflächenbohrung (22), einem Federtopf (23), einer Durchbruchsbohrung (24) und einer Gewindebohrung (25) zusammen. Im Bereich der Öffnung der Zylinderflächenbohrung (22), deren Durchmesser z.B. 20 mm misst, befindet sich z.B. ein Feingewinde (26) zur Adaption einer Antriebsvorrichtung.

An die Zylinderflächenbohrung (22), in der ein Schlitten (90) geführt ist, schließt sich über einen planen Gehäusebund der Federtopf (23) an. Der plane Gehäusebund dient als vorderer Anschlag für den Schlitten (90) bzw. als vorderes Ende der Schlittenführung. Der Federtopf (23), der zwei Schraubendrückfedern (98) führt, hat einen kleineren Querschnitt als die Zylinderflächenbohrung (22). An den Federtopf (23) schließt sich die Durchbruchsbohrung (24) an. Sie hat z.B. einen Durchmesser von 4,3 mm. Die Durchbruchsbohrung (24) wird von einer Schubstange (106) durchquert.

Die Durchbruchsbohrung (24) mündet in eine im vertikalen Längsschnitt ovale Käfiglagerausnehmung (35), in der ein Käfig eines Schiebekeilgetriebes (100) geführt ist, vgl. Figuren 12 und 13. Die Käfiglagerausnehmung (35) ist Teil einer quer zur Stufenbohrung (21) ausgerichteten Gehemmebohrung (31). Ihre Mittellinie (39) schneidet die Mittellinie (29).

Die Gehemmebohrung (31) hat neben der Käfiglagerausnehmung (35) drei abgestufte Bereiche, vgl. Figur 5. Von der Gehäuseaußenseite her sind das eine Hauptbohrung (32), eine Druckstückführungsbohrung (33) und eine Austrittsbohrung (34). Die Hauptbohrung (32) mündet in die - in Führungslängsrichtung - breitere Käfiglagerausnehmung (35). In ihrem Feingewinde sitzt ein als Stützelement wirkender Einschraubdeckel (85).

In der Druckstückführungsbohrung (33) ist das Schrägdruckstück (81) gelagert. Es hat die Form eines zylindrischen Kolbens mit angeformter Kolbenstange. Die Kolbenstange ragt bei betätigtem Reibgehemme (121) aus der Austrittsbohrung (34) heraus. Am Übergang der Kolbenstange zum Kolben befindet sich eine umlaufende Stirnnut, in der ein elastischer Rückhubring (83) mit z.B. rechteckigem Einzelquerschnitt sitzt. Der elastische Rückhubring (83) stützt sich an einem zwischen der Druckstückführungsbohrung (33) und der Austrittsbohrung (34) gelegenen Gehäusebund ab. Nach Figur 2 hat das Schrägdruckstück (81) im unteren Bereich eine Abflachung, an der zur Verdrehsicherung ein im Gehäuse (10) eingeschraubter Gewindestift (38) anliegt.

Die Kolbenstange des Schrägdruckstücks (81) bildet zugleich eine Reibbacke (122) des Reibgehemmes (121). Die außenseitige Stirnfläche des Schrägdruckstückes (81), die beim Klemmen die Führungsschiene (7) kontaktiert, weist ggf. einen Reibbelag auf. Als Reibbelag wird beispielsweise ein pulvermetallurgisch hergestellter Reibwerkstoff auf Bronzebasis verwendet.

In der Verlängerung der Durchbruchsbohrung (24) befindet sich in der Vorderseite des Gehäuses (10) - zur Erleichterung der Montage - eine Gewindebohrung (25), in die ein Gewindestift (28) eingeschraubt ist.

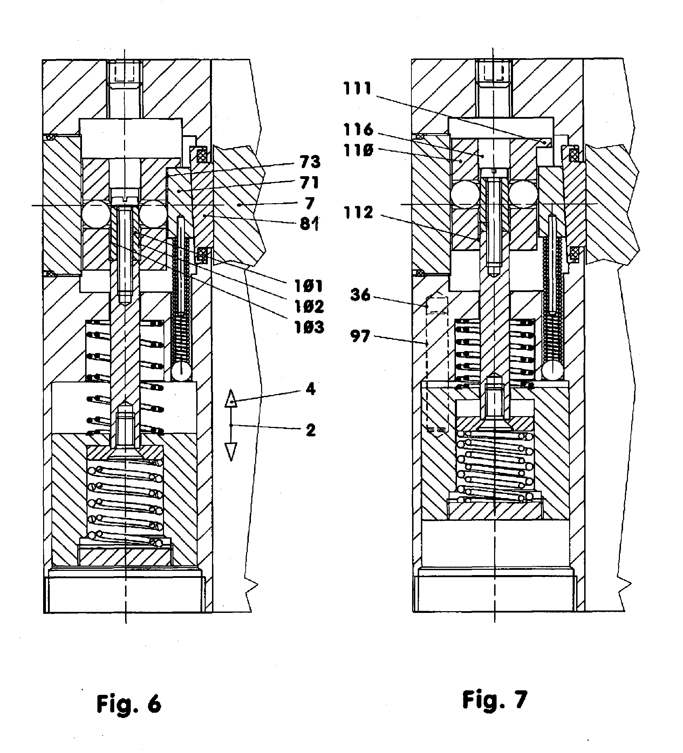

Die Zylinderflächenbohrung (22) und die Käfiglagerausnehmung (35) sind zusätzlich über eine zur Mittellinie (29) parallele Federführungsbohrung (27) verbunden, vgl. Figur 5. Ferner befindet sich in diesem mittleren Gehäusebereich in der Bodenfläche der Zylinderflächenbohrung (22) eine weitere, ebenfalls zur Mittellinie (29) parallele Verdrehsicherungsbohrung (36), vgl. Figur 7.

Der Grundkörper (10) hat in seiner Oberseite eine Ausnehmung (16, 17). Der obere Bereich der Ausnehmung (16, 17) ist eine nahezu rechteckige Vertiefung (16) zur Aufnahme eines Deckels (37), vgl. Figur 12. Die Vertiefung (16) geht in eine im Querschnitt zumindest annähernd dreieckige Ausnehmung (17) über, die die Zylinderflächenbohrung (22) schneidet. Die Ausnehmung (17) umschließt einen Raum, in dem sich eine Rastschwinge als Koppelelement (51) des Formrichtgesperres (50) bewegt.

In der Käfiglagerausnehmung (35) ist in der Nähe der Nut (19) das erste Schiebekeilgetriebe (70) angeordnet. Es besteht aus dem Schrägdruckstück (81) und dem Folgekeil (71). Der im Längsschnitt achteckige Folgekeil (71), vgl. Figuren 2 und 3, liegt mit seiner Keilfläche (72) am Schrägdruckstück (81) an. Die Keilfläche (72) des Folgekeils (71) und die Keilfläche (82) des Schrägdruckstücks (81) schließen mit der Führungslängsrichtung (2) einen Winkel von 2,5 Winkelgraden ein. Der genannte Winkel kann je nach Ausführungsform in einem Bereich von 2 bis 10 Winkelgraden liegen. Dieser Winkelbereich gewährleistet eine Selbsthemmung zwischen dem gleitenden Folgekeil (71) und dem Schrägdruckstück (81), sofern beide Bauteile aus einer Stahllegierung bestehen und sich zumindest weitgehend trocken kontaktieren.

Der Folgekeil (71) hat einen rechteckigen Querschnitt, der sich in Richtung der vorderen Stirnfläche (74) einachsig und z.B. linear verjüngt.

Im Folgekeil (71) steckt rückseitig eine Führungsstange (77), die in die Federführungsbohrung (27) hineinragt. In der Federführungsbohrung (27) ist eine Klemmkugel (79) eingestaucht. Auf der Federführungsstange (77) ist zumindest bereichsweise als Federelement (78) eine Schraubendruckfeder geführt. Letztere stützt sich zwischen der Klemmkugel (79) und dem Folgekeil (71) ab.

Zwischen dem Folgekeil (71) und dem Stützelement (85) ist der beispielsweise aus Polyoxymethylen (POM) gefertigte Käfig (110) angeordnet. vgl. u.a. Figur 4. Der Käfig (110), der Teil eines zweiten Schiebekeilgetriebes (100) ist, ist hier ein Raumkörper, der aus zwei aneinander geformten gleichgroßen Zylinderteilstücken besteht. Jedes Zylinderteilstück hat den Querschnitt eines Kreisabschnittes, dessen Bogenhöhe kleiner ist als der des Kreisradius. Die Bogenhöhe entspricht z.B. ca. 83% des Kreisradius. Die gedachte, zwischen den Zylinderteilstücken gelegene, Kontaktebene wird als Käfigmittenlängsebene bezeichnet.

Parallel zur Käfigmittenlängsebene hat der Käfig (110) einen Durchgangskanal (115) mit einem zumindest annähernd rechteckigen Querschnitt. Der Durchgangskanal (115) wird durch die Käfigmittenlängsebene halbiert. In den beiden Endbereichen des Durchgangskanals (115) sitzen mit Spiel die Zylinderrollen (119).

Quer zur Käfigmittenlängsebene hat der Käfig (110) eine Schiebekeilausnehmung (116) mit einem ebenfalls zumindest annähernd rechteckigen Querschnitt. Die einseitig in den Käfig (110) eingearbeitete Schiebekeilausnehmung (116) erstreckt sich so weit in das Innere des Käfigs (110), dass sie die hier sichtbare Seite des Käfigs an zwei Stellen in Form zweier annähernd rechteckiger Fenster durchdringt. Zwischen den Fenstern befindet sich eine Querbohrung (117), die normal zur Käfigmittenlängsebene orientiert ist und beispielsweise mittig auf die Schiebekeilausnehmung (116) trifft. Bei eingebautem Käfig (110) wird die Querbohrung (117) von der Schubstange (106) durchquert, vgl. auch Figuren 12 und 13.

Der Käfig (110) hat auf der dem Folgekeil (71) zugewandten Seite einen vorderen Anschlag (111). Auf dieser Seite befindet sich außerdem oberhalb und unterhalb des Durchgangskanals (115) jeweils ein vorspringender Führungssteg (113). Die Führungsstege (113) führen den Folgekeil (71).

Der Boden der Schiebekeilausnehmung (116), vgl. Figuren 12 und 13, bildet einen hinteren Käfiganschlag (112).

Nach Figur 5 ist zwischen den Zylinderrollen (119) der z.B. ebenfalls im Längsschnitt achteckige Antriebskeil (101) angeordnet, vgl. auch Figuren 2 und 3. Der Antriebskeil (101) hat seitlich zwei Keilflächen (102, 103), die gegenüber einer Einkeilrichtung (89) jeweils einen Winkel von 0,4 bis 1 Winkelgrade einschließen. Im Ausführungsbeispiel beträgt der Winkel 0,65 Winkelgrade.

Auch der Antriebskeil (101) hat einen rechteckigen Querschnitt, der sich in Einkeilrichtung (89) einachsig und z.B. linear verjüngt.

Die Einkeilrichtung (89) ist dabei diejenige Verschieberichtung des antreibenden Keiles, bei der eine quer zur Verschieberichtung orientierte Spreizwirkung der gepaarten Schiebekeile eines Getriebes entsteht. Sie ist bei dem Ausführungsbeispiel nach Figur 5 bei fast allen Antriebskeilpositionen nicht parallel zur Führungslängsrichtung (2).

Nach der Figur 3, 5 und 12 liegen die Schwerpunkte der Schiebekeile (71, 101) in der gemeinsamen Ebene der Mittellinien (29, 39) und somit auf der mittleren Höhe der Nebenflächen (8,9) der Führungsschiene (7), vgl. Figur 11, sodass beim Klemmen auf die Schiebekeile (71, 101) keine Drehmomente um die Mittellinien (29) entstehen.

Der Antriebskeil (101) ist am vorderen Ende einer z.B. zylindrischen Schubstange (106) mittels einer Schraube (107) starr befestigt. Am hinteren Ende der Schubstange (106) ist zentriert ein scheibenförmiger, kreisrunder Teller (108) mittels der Senkschraube (109) fest montiert. Diese Schubstange (106) bildet das zwischen zwei Endlagen bewegbare Abtriebselement der Vorrichtung.

Der Teller ist in einem Schlitten (90) federbelastet geführt. Der Schlitten (90) ist wiederum in der Zylinderflächenbohrung (22) des Grundkörpers (10) gelagert und geführt.

Der Schlitten (90) ist im Wesentlichen ein topfförmiges Bauteil, das zumindest bereichsweise eine zylindrische Außenkontur aufweist. Die Außenkontur hat einen Durchmesser von z.B. 20 mm. Parallel zur Mittellinie (29) der zylindrischen Außenkontur (91) zeigt sie eine plane Abflachung (92) auf. Der kürzeste Abstand zwischen der Mittellinie (29) und der Abflachung (92) beträgt 8 mm.

Der Schlitten (90) weist eine zentrale durchgehende Stufenbohrung (93-95) auf. Der vordere Bereich der Stufenbohrung ist ein Durchbruchsabschnitt (93), der mittlere Bereich ein zylindrischer Führungsabschnitt (94) und der hintere Bereich ein Deckellagerabschnitt (95) mit Innengewinde. Der Führungsabschnitt (94) hat einen Durchmesser von z.B. 10,6 mm. In ihm ist der Teller (108) geführt. Im Deckellagerabschnitt (95) ist ein Deckel (96) eingeschraubt. Zwischen dem Deckel (96) und dem Teller (108) sind zwei Federelemente (99), z.B. zwei Schraubendruckfedern, eingebaut. Die Schraubendruckfedern (99) können, wie auch die vor dem Schlitten (90) gelegenen Schraubendruckfedern (98), gegenläufige Steigungen haben. Die Federkraft des Systems aus den parallel geschalteten Federelementen (99) ist bei jedem Hub größer als die Federkraft des Systems aus den parallel geschalteten Federelementen (98).

Eine auf den Antriebskeil (101) wirkende Antriebsvorrichtung verschiebt z.B. zum Bremsen, Klemmen oder Greifen den Schlitten (90) nach vorn und beim Lösen in die entgegengesetzte Richtung. Im Ausführungsbeispiel, nach Figur 5 bis 7, spannt die den Schlitten (90) in Antriebsrichtung (4) schiebende Antriebsvorrichtung die zumindest geringfühig vorgespannten Schraubendruckfedern (98). Letztere bilden hier einen Federspeicher, dessen Energie erst wieder beim Lösen der Brems-, Klemm- oder Greifvorrichtung benötigt wird.

Wird kein Formrichtgesperre (50) verwendet, kann die Schubstange (106) bzw. der Teller (108) in Führungslängsrichtung unnachgiebig angelenkt werden. Die Antriebsvorrichtung kann aber auch direkt auf die Schubstange (106) wirken.

In der vorderen Stirnfläche des Schlittens (90) ist eine zur Mittellinie (29) parallele Bohrung eingearbeitet, in der ein Verdrehsicherungszapfen (97) mittels eines Querpresssitzes steckt. Der Verdrehsicherungszapfen (97) führt den Schlitten (90) verdrehsicher in der Verdrehsicherungsbohrung (36) des Gehäuses (10), vgl. Figuren 2 und 7.

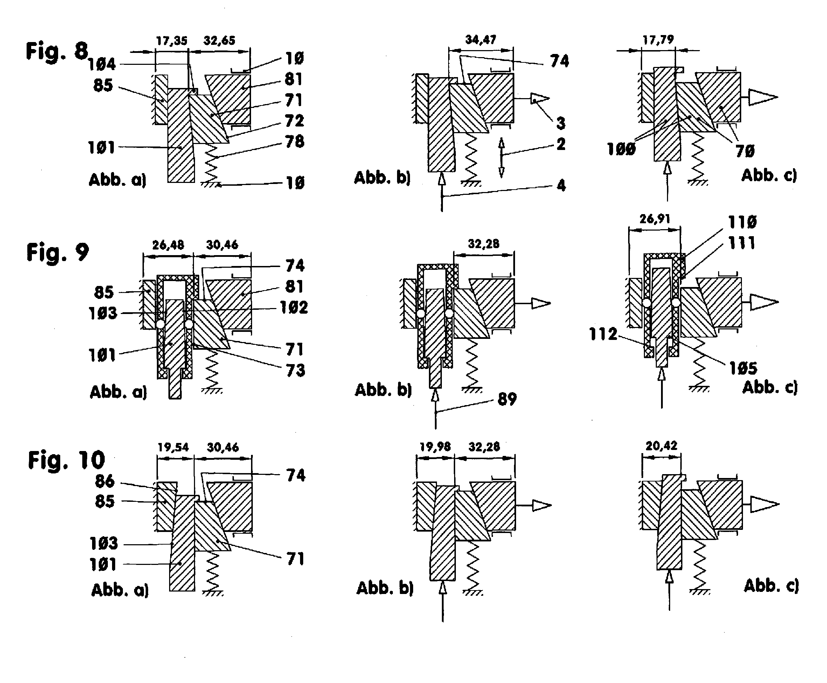

In den Figuren 8 bis 10 sind beispielhaft drei Arten des Zusammenwirkens von je zwei Schiebekeilgetrieben (70, 100) schematisch dargestellt. Die Keilwinkel dieser Schiebekeilgetriebe sind zur optischen Funktionsverdeutlichung gegenüber der in den Figuren 1 bis 4 und 11 bis 15 dargestellten Variante sehr groß gewählt. Das in den Figuren 1 bis 4 und 11 bis 15 beschriebene Funktionsprinzip entspricht in den schematischen Darstellungen der Figur 9.

Nach Figur 8, Abb. a) besteht ein erstes Schiebekeilgetriebe (70) aus einem in einem Gehäuse (10) geführten Schrägdruckstück (81) und einem Folgekeil (71). Das Schrägdruckstück (81) ist Teil des Reibgehemmes (121). Es liegt bei geklemmter Vorrichtung an der Führungsschiene (7) an, vgl. auch Figur 5. Der Folgekeil (71), der mit seiner rechten Keilfläche (72) am Schrägdruckstück (81) anliegt, stützt sich über ein Federelement (78), hier z.B. eine Schraubendruckfeder, am Gehäuse (10) ab. Seine ebenfalls als Keilfläche (73) ausgebildete Rückseite und seine Stirnfläche (74) liegen zumindest partiell an einem Antriebskeil (101) an. Die Keilflächen (72, 82) sind um 20 Winkelgrade gegenüber der Führungslängsrichtung (2) des Antriebskeils (101) gleichsinnig geneigt. Die linke Keilfläche (73) des Folgekeils (71) kontaktiert die Keilfläche (102) des Antriebskeils (101). Beide Keilflächen (73, 102) sind gegenüber der Führungslängsrichtung (2) gleichsinnig geneigt. Der Keilwinkel beträgt hier z.B. 5 Winkelgrade. Für die Anlage der Stirnfläche (74) des Folgekeils (71) weist der Antriebskeil (101) einen vorderen Anschlag (104) auf.

Der Antriebskeil (101) ist Teil des zweiten Schiebekeilgetriebes (100), das ebenfalls ein Gleitschiebekeilgetriebe ist. Letzteres hat neben dem Antriebskeil (101) ein Stützelement (85). Das Stützelement (85) ist am Gehäuse (10) befestigt. Ggf. ist es auch ein angeformtes Bestandteil des Gehäuses (10). Der Antriebskeil (101) und das Stützelement(85) kontaktieren sich direkt über Planflächen, die parallel zur Führungslängsrichtung (2) orientiert sind. Nach Figur 8, Abb. a) befinden sich die Schiebekeilgetriebe (70, 100) in einer hinteren, unbetätigten Position. Das Schrägdruckstück (81) ist nicht zum Klemmen, Bremsen oder Greifen ausgefahren.

Wirkt nun eine Antriebsvorrichtung auf den Antriebskeil (101), um ihn in Einkeilrichtung (89) zu bewegen, gleitet dieser z.B. kontinuierlich nach vorn bzw. nach den Figuren 8 bis 10 nach oben.

Da das zweite Schiebekeilgetriebe (100) ohne die Anlage des Schrägdruckstückes (81) an der Führungsschiene (7) keine nennenswerte Gegenkraft erfährt, folgt der Folgekeil (71), angetrieben von dem vorgespannten Federelement (78) dem Antriebskeil (101). Dabei schiebt Letzterer das Schrägdruckstück (81) gegen die Führungsschiene (7), vgl. Figur 6. Sobald sich das Schrägdruckstück (81) an der Führungsschiene (7) anlegt, diese ggf. sogar noch geringfügig nach rechts verschiebt, bis die Führungsschiene (7) z.B. nahezu spielfrei im Gehäuse (10) umgriffen wird, wird die Haftreibung zwischen dem Schrägdruckstück (81) und dem Folgekeil (71) so groß, dass sich der Folgekeil (71) nicht mehr in der Einkeilrichtung (89) weiterbewegt. Die Spreizbreite des ersten Schiebekeilgetriebes (70) hat sich beispielsweise nach Figur 8 von 32,65 Einheitslängen auf 34,47 Einheitslängen erhöht.

Trotz des Stoppens des Folgekeils (71) gleitet der Antriebskeil (101) - angetrieben von der Antriebsvorrichtung - in Einkeilrichtung (89) weiter, vgl. Figur 8, Abb. b). Aufgrund der Orientierung der Keilflächen (73) und (102) wird das erste Schiebekeilgetriebe (70) zum Festklemmen als Block mit großer Kraft gegen die Führungsschiene (7) gepresst, vgl. Figur 8, Abb. c). Die Spreizbreite des zweiten Schiebekeilgetriebes (100) hat sich nach Figur 8 von 17,35 Einheitslängen auf 17,79 Einheitslängen erhöht. Zum Erreichen dieser Zahlenwerte wurden beide Keile (71, 101) jeweils um 5 Einheitslängen in Antriebsrichtung (4) der Antriebsvorrichtung bewegt.

Zum Lösen der klemmenden Wirkung des Reibgehemmes (121, 131) wird der Antriebskeil (101) mittels der Antriebsvorrichtung zurückgezogen. Hierbei legt sich - nach einer ersten Verfahrstrecke - der Anschlag (104) des Antriebskeils (101) an der vorderen Stirnfläche des Folgekeils (71) an, um ihn in seine hintere Position, vgl. Figur 8, Abb. a) zu schleppen. Bei dieser Schleppbewegung wird das Federelement (78) als Federspeicher vorgespannt. Mit der Rückwärtsbewegung der Keile (101, 71) bewegt sich auch das Schrägdruckstück (81) entgegen der Klemmrichtung (3) in seine Ausgangslage zurück. Dabei wird es mittels eines vorgespannten Elastomerkörpers (83), vgl. Figur 5, oder eines anderen Federelements unterstützt.

Nach Figur 9 stützt sich der Antriebskeil (101) zwischen dem Folgekeil (71) und dem Stützelement (85) wälzgelagert ab, vgl. auch Figuren 5 bis 6. Dazu wird der Antriebskeil (101) zumindest partiell von einem z.B. zwei Zylinderrollen (119) führenden Käfig (110) umgeben.

In dieser Variante hat der Folgekeil (71) eine Rückseite (73), die parallel zur Abstützseite des Stützelements (85) ausgerichtet ist. Der Antriebskeil (101) hat eine rechte (102) und eine linke Keilfläche (103). Jede der Keilflächen (102, 103) ist gegenüber der Führungslängsrichtung (2) z.B. um 2,5 Winkelgrade wechselsinnig geneigt. Sie schließen somit einen Keilwinkel von 85 Winkelgraden ein, dessen Spitze in Antriebsrichtung (4) vor dem Antriebskeil (101) liegt.

Der Käfig (110) weist mindestens zwei Anschläge (111, 112) auf, die in entgegengesetzte Richtungen wirken. Der vordere Anschlag (111) ist vergleichbar mit dem Anschlag (104) des Antriebskeils (101) aus Figur 8. Der hintere Anschlag (112) liegt nach Figur 9, Abb. a) und b) z.B. an der Rückseite des Antriebskeiles (101) an, um bei einem Zurückfahren des Antriebskeiles (101) den Folgekeil (71) mit Hilfe des vorderen Anschlags (111) des Käfigs (110) zurückziehen zu können.

Beim Klemmvorgang legt sich in einem ersten Schritt, wie bei Figur 8, das Schrägdruckstück (81) an der Führungsstange (7) an, während der Folgekeil (71) an ihm entlanggleitet, vgl. auch Figur 6. Die Spreizbreite vergrößert sich nach Figur 9 von 30,46 auf 32,28 Einheitslängen.

Im zweiten Schritt, in dem das zweite Schiebekeilgetriebe (100) die Klemmkraft erzeugt, vgl. auch Figur 8, rollt der Antriebskeil (101) um 10 Einheitslängen in Antriebsrichtung (4), um die Spreizbreite dieses zweiten Schiebekeilgetriebes (100) von 26,48 auf 26,91 Einheitslängen zu ändern. Der Käfig (110) ist hierbei nur um 5 Einheitslängen nach vorne gewandert. Der Antriebskeil (101) hat sich dabei vom hinteren Anschlag (112) des Käfigs (110) gelöst.

Die Figur 10 zeigt zwei Schiebekeilgetriebe (70, 100), bei denen die Keile (71, 101) beider Keilpaare aneinander entlanggleiten. Das erste Schiebekeilgetriebe (70) entspricht hier den Schiebekeilen nach Figur 9. Der Antriebskeil (101) liegt über eine Planfläche (102) am Folgekeil (71) an, die parallel zur Führungslängsrichtung (2) orientiert ist. Das Stützelement (85) kontaktiert er über eine Keilfläche (103), wobei die Keilfläche (86) des Stützelements (85) und die des Antriebskeils (101) mit dem gleichen Winkel, z.B. 5 Winkelgraden, in die gleiche Richtung geneigt sind.

Die Besonderheit ist hier, dass sich schon beim ersten Verschieben des Antriebskeils (101) auch durch das zweite Schiebekeilgetriebe (100) eine in Klemmrichtung zustellende Bewegung ergibt. Während das erste Schiebekeilgetriebe (70) seine Spreizbreite von 30,46 auf 32,28 Einheitslängen ändert, vgl. auch Figur 5, vergrößert sich die Spreizbreite beim ersten Verschieben von 19,54 auf 19,98 Einheitslängen und beim zweiten Verschieben, wenn das zweite Schiebekeilgetriebe (100) als Block bewegt wird, von 19,98 auf 20,42 Einheitslängen.

Die Variante nach Figur 10 kann mit der Variante aus Figur 8 so kombiniert werden, dass der Folgekeil (71) eine zweite zum Antriebskeil (101) hin orientierte Keilfläche erhält. Der Antriebskeil (101) hat dann zwei Keilflächen, wie dies auch aus Figur 5 bzw. 9 bekannt ist. Die Neigungen der einzelnen Keilflächen (102, 103) gegenüber der Einkeilrichtung (89) und/oder gegenüber der Führungslängsrichtung (2) müssen nicht identisch sein.

Zudem können bei den Varianten nach Figur 8 und Figur 10 jeweils zwischen dem Antriebskeil (101) und dem Folgekeil (71) sowie zwischen dem Antriebskeil (101) und dem Stützelement (85) ein Käfig mit zwei oder mehr Zylinderrollen oder Kugeln angeordnet sein.

Um die Vorrichtung z.B. nur mit Hilfe eines Druckluftstoßes oder eines Stromimpulses betätigen oder lösen zu können ist hier zwischen dem Schlitten (90) und dem Grundkörper (10) das bistabile Formrichtgesperre (50) angeordnet. Es umfasst neben dem Gehäuse (10) und dem Schlitten (90) eine am Schlitten (90) angeordnete Rastbahn (69) und eine am Gehäuse (10) sich abstützende Rastschwinge (51), deren schwingendes Ende in oder an der Rastbahn (69) geführt ist.

Die Rastschwinge (51) ist im Wesentlichen ein Stab mit rechteckigem Querschnitt. Er weist in jedem Endbereich und im mittleren Bereich jeweils eine Bohrung auf. Im vorderen Endbereich befindet sich die Schwenkbohrung (53), in der sich die Rastschwinge (51) um einen Schwenkbolzen (54) dreht. Der Schwenkbolzen (54) ist im Grundkörper (10) in einer Bohrung mittels eines Querpresssitzes befestigt, vgl. Figuren 12 und 13. Die Mittellinie des Schwenkbolzens (54) ist dessen gedachte Schwenkachse (52), die senkrecht die Mittellinie (29) schneidet. Im vorderen Bereich ist die Zapfenbohrung (55) angeordnet, in die ein Führungszapfen (56) eingepresst ist. Letzterer ragt nach unten aus der Rastschwinge (51) heraus. In der Nähe des Führungszapfen ist in der dritten Bohrung ein Kugeldruckstück (58) eingepresst. Aus dem Kugeldruckstück (58) ragt oben eine Kugel heraus, die bei montierter Vorrichtung federbelastet an der Unterseite des Deckels (37) anliegt. Das Kugeldruckstück (58) fixiert reibschlüssig jede beliebige Lage der Rastschwinge (51) gegenüber dem Deckel (37).

Die Mittellinien aller drei Bohrungen der Rastschwinge (51) liegen z.B. in einer Ebene.

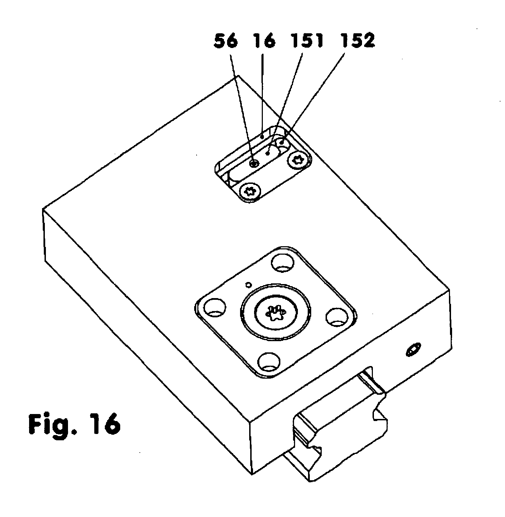

Anstelle der Rastschwinge (51) kann als Koppelelement auch ein Querschieber (151) verwendet werden, vgl. Figur 16. In dieser Figur ist eine perspektivische Draufsicht auf eine Klemmvorrichtung gezeigt, bei der der Deckel (37), vgl. Figur 12, weggelassen ist. In der Ausnehmung (16) befindet sich anstelle der bisherigen Ausnehmung (17) eine Quernut (152) in der ein passstiftartiger Querschieber (151) quer zur Führungslängsrichtung verschiebbar angeordnet ist. Der Querschieber (151) trägt z.B. mittig den Führungszapfen (56), der in den Kulissenkanal (60) des Schlittens (90) eingreift.

Es ist auch denkbar, den Führungszapfen (56) starr am Gehäuse (10) zu befestigen. Ersatzweise befindet sich bei dieser Lösung der Kulissenkanal (60) auf einem kleinen Querschlitten, der quer zur Führungslängsrichtung (2) am Schlitten (90) gelagert ist.

Im Ausführungsbeispiel ist die Rastbahn (69) in Form eines Kulissenkanals (60) in die Abflachung (92) des Schlittens (90) eingearbeitet, vgl. Figuren 2, 3, 14 und 15. In den Kulissenkanal (60), der z.B. einen rechteckigen Querschnitt hat, ragt der Führungszapfen (56) mit teilweise geringem Seitenspiel mindestens 2 mm tief hinein.

Ggf. sitzt der Führungszapfen (56) wälzgelagert in der Zapfenbohrung (55) oder er trägt an seinem freien, in den Kulissenkanal (60) hineinragenden, Ende eine gleit- oder wälzgelagerte Rolle.

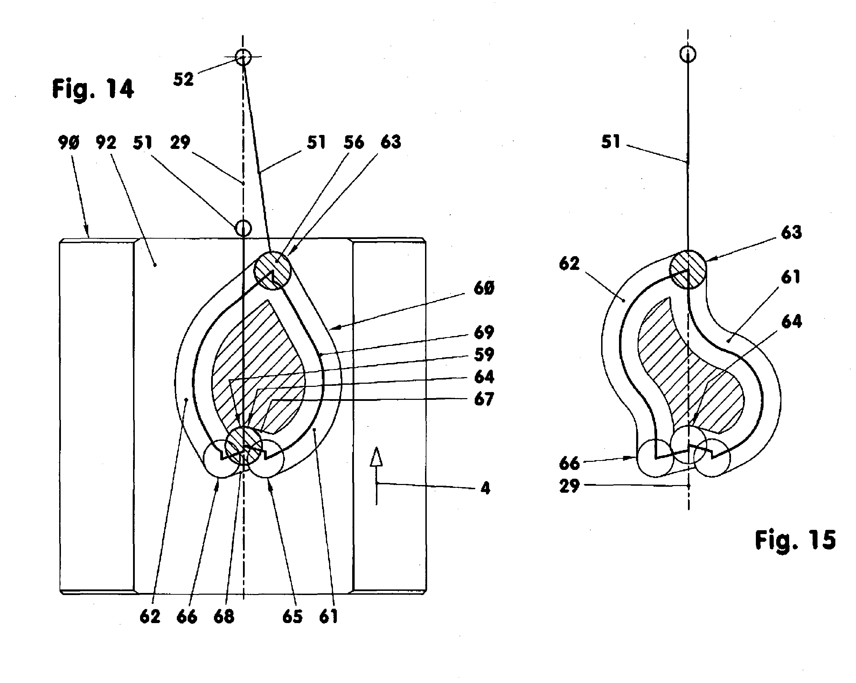

Die Mittellinie (57) des Führungszapfens (56) beschreibt die Rastbahn (69) innerhalb des Kulissenkanals (60). Die Rastbahn (69) stellt einen geschlossenen Kurvenzug dar, der mehrere Unstetigkeitsstellen aufweist, vgl. Figuren 14 und 15. Im Kulissenkanal (60), der großteils aus einem Spannkanal (61) und einem Lösekanal (62) besteht, gibt es zwei Langzeithaltelagen (63, 64) und zwei Kurzzeithaltelagen (65, 66).

Die erste Langzeithaltelage (63) ist die Position, in der sich der Führungszapfen (56) nach Figur 2 befindet. Ihre Mitte liegt z.B. 1,6 mm nach rechts versetzt zur Mittellinie (29). Die Federelemente (98) halten hier den Schlitten (90) bei unbetätigter Vorrichtung in seiner hinteren Position. Wird nun der Schlitten (90) mittels der Antriebsvorrichtung nach vorn, also in Antriebsrichtung (4), bewegt, gleitet der Führungszapfen (56) im Spannkanal (61) - rechts der Mittellinie (29) - zwischen einer Innen- und einer Außenflanke des Kulissenkanals (60) geführt, nach hinten, bis er nach z.B. ca. 10 mm Hub in der ersten Kurzzeitposition (65) blockiert. Die Innenflanke ist hierbei diejenige Flanke, die den Bereich der Abflachung (92) abgrenzt, der vom Kulissenkanal (60) umschlossen wird.

Sobald der Antriebsimpuls der Antriebsvorrichtung beendet ist, drücken die Federelemente (98) den Schlitten (90) nach Figur 14 ca. 0,7 mm nach vorn. Der Führungszapfen (56) schlägt an der Fangflanke (67) an und wird durch diese nach links - unter einem Winkel von 15 Winkelgraden - in die stabile zweite Langzeithaltelage (64) gedrängt. Der Mittelpunkt dieser Langzeithaltelage (64) liegt - in Führungslängsrichtung (2) gemessen - somit 0,7 mm vor dem Mittelpunkt der ersten Kurzzeithaltelage (65). Im Bereich der Langzeithaltelage (64) bildet die Innenflanke eine Kerbe (59) aus, an der der Führungszapfen (56) sicher anliegt.

Nach dem Ausführungsbeispiel ist nun die Vorrichtung betätigt, vgl. Figur 3, 7 und 12.

Zum Lösen der Klemmung schiebt die betätigte Antriebsvorrichtung den Schlitten (90) in Antriebsrichtung (4) so weit nach vorn, dass der Führungszapfen (56) gegen eine Ablenkflanke (68) stößt, um unter einem Winkel von z.B. 19 Winkelgraden nach links in die zweite Kurzzeithaltelage (66) geschoben zu werden.

Der Mittelpunkt der zweiten Kurzzeithaltelage (66) liegt - gemessen in Führungslängsrichtung - z.B. 0,7 mm hinter dem Mittelpunkt der zweiten Langzeithaltelage (64). Bei einem Nachlassen der Antriebskraft der Antriebsvorrichtung schieben die Federelemente (98) den Schlitten (90) wieder nach hinten, wodurch der Führungszapfen (56) aus der Kurzzeithaltelage (66) - abgelenkt durch die Innenflanke des Kulissenkanals (60) zwangsweise links von der Mittellinie (29) in den Lösekanal (62) gelangt. Der Führungszapfen (56) gleitet in die erste Langzeithaltelage (63) zurück.

Beim Lösevorgang führt der Schlitten (90) eine Hubbewegung aus, vgl. Figur 13, obwohl die Reibgehemme (121, 131) fest an der Führungsschiene (7) anliegen. Der Antriebskeil (101) kann sich somit nicht in Einkeilrichtung (89) verschieben. Folglich hebt der Boden (96) des Schlittens (90) während des zwischen der zweiten Langzeithaltelage (64) und der zweiten Kurzzeithaltelage (66) gelegenen Hubs gegen die Wirkung der Federelemente (99) vom Teller (108) ab.

In Figur 15 wird ein alternativer Kulissenkanal (60) gezeigt. Der Kulissenkanal ist auf der Abflachung (92) so ausgerichtet, dass die Langzeithaltepunkte (63) und (64) sowie die Schwenkachse (52) des Schwenkbolzens (54) in der Ebene liegen, in der auch die Mittellinie (29) angeordnet ist. Zudem sind der Spannkanal (61) und der Lösekanal (62) jeweils in der Ebene der Abflachung (92) s-förmig gekrümmt. Diese Krümmung ermöglicht es dem Führungszapfen (56), aus der ersten Langzeithaltelage (63) auf einem stetigen Rastbahnabschnitt ruckfrei in den Spannkanal (61) einzufädeln. Vergleichbares gilt für den Führungszapfen (56) beim Einspuren in den Lösekanal (62) aus der zweiten Kurzzeithaltelage (66) heraus.

Bei beiden in den Figuren 14 und 15 gezeigten Varianten schwenkt bei einem kompletten Kulissendurchlauf die Rastschwinge (51) zunächst im Gegenuhrzeigersinn. Hierbei gleitet der Führungszapfen (56) an der Innenflanke des Spannkanals (61) entlang. Sobald er dort von der Innenflanke zur Außenflanke wechselt, schwingt die Rastschwinge (51) im Uhrzeigersinn zurück, bis der Führungszapfen (56) im Lösekanal (62) die Anlage an der Innenflanke mit der Anlage an der Außenflanke tauscht. Auf diese Weise überdeckt die Rastschwinge (51) einen Pendelbereich von ca. 36 bis 40 Winkelgraden.

Die für das Lösen erforderliche Vorschubbewegung der Antriebsvorrichtung hat einen kürzeren Hub als die für das Klemmen notwendige Vorschubbewegung.

Selbstverständlich können die einzelnen Schiebekeilgetriebe auch schräg oder quer gegenüber der Führungslängsrichtung angeordnet sein.

### Bezugszeichenliste:

- 1: Maschinenschlitten
- 2: Führungslängsrichtung, Maschinenschlittenbewegung
- 3: Klemmrichtung, quer zu (2)
- 4: Antriebsrichtung, parallel zu (2); Wirkrichtung größere Komponente von (89)
- 5: Maschinenbett
- 6: vertikale Mittenlängsebene
- 7: Schiene, Führungsschiene
- 8, 9: Nebenflächen

- 10: Grundkörper, c- bzw. u-förmig; Gehäuse
- 11: Gehäusezone, rechts
- 12: Gehäusezone, links
- 13: Flanschzone
- 15: Oberseite
- 16: Ausnehmung, rechteckig, Vertiefung
- 17: Ausnehmung, dreieckig
- 18: Zapfen
- 19: Nut, zentral

- 21: Stufenbohrungen
- 22: Zylinderflächenbohrung
- 23: Federtopf,
- 24: Durchbruchsbohrung
- 25: Gewindebohrung
- 26: Feingewinde
- 27: Federführungsbohrung
- 28: Gewindestift
- 29: Mittellinie
- 31: Gehemmebohrungen
- 32: Hauptbohrungen
- 33: Druckstückführungsbohrungen, Führungen
- 34: Austrittsbohrungen
- 35: Käfiglagerausnehmung, oval
- 36: Verdrehsicherungsbohrung
- 37: Deckel, rechteckig
- 38: Gewindestift
- 39: Mittellinien

- 40: Vorrichtungsträger
- 41: Durchgangsbohrung
- 42: Zylindersenkung, groß
- 43: Zylindersenkung, klein
- 44: Gewindebohrungen
- 46: Ausnehmung
- 47: Scheibe
- 48: Senkschraube
- 49: Elastomerkörper, ringförmig

- 50: Rastmechanik; Formrichtgesperre, bistabil
- 51: Koppelelement, Rastschwinge
- 52: Schwenkachse
- 53: Schwenkbohrung
- 54: Schwenkbolzen
- 55: Zapfenbohrung
- 56: Führungszapfen
- 57: Mittellinie von (56)
- 58: Kugeldruckstück
- 59: Kerbe in (60)

- 60: Kulissenkanal
- 61: Spannkanal
- 62: Lösekanal
- 63: Langzeithaltelage, vorn
- 64: Langzeithaltelage, hinten
- 65: Kurzzeithaltelage im Spannkanal
- 66: Kurzzeithaltelage im Lösekanal
- 67: Fangflanke, Teil der Innenflanke
- 68: Ablenkflanke, Teil der Außenflanke
- 69: Rastbahn

- 70: erstes Schiebekeilgetriebe, Gleitschiebekeilgetriebe
- 71: Folgekeil, Schiebekeil
- 72: Keilfläche, rechts
- 73: Keilfläche, links; Rückseite
- 74: Folgekeilstirnfläche

- 77: Führungsstange
- 78: Federelement, Schraubendruckfeder
- 79: Klemmkugel

- 81: Schrägdruckstück, Klemm- oder Greifelement
- 82: Keilfläche
- 83: Rückhubring, Elastomerkörper
- 85: Stützelement, Einschraubdeckel
- 86: Keilfläche
- 89: Einkeilrichtung

- 90: Schlitten
- 91: Außenkontur, zylindrisch
- 92: Abflachung
- 93: Durchbruchsabschnitt, Stufenbohrung, zentral
- 94: Führungsabschnitt, Stufenbohrung
- 95: Deckellagerabschnitt, Stufenbohrung
- 96: Boden, innen
- 97: Verdrehsicherungszapfen
- 98: Federelement, Federsystem; Schraubendruckfedern, außen
- 99: Federelement, Federsystem; Schraubendruckfedern, innen
- 100: zweites Schiebekeilgetriebe, ggf. Wälzschiebekeilgetriebe
- 101: Antriebskeil, Schiebekeil
- 102: Keilfläche, Planfläche, rechts
- 103: Keilfläche, Planfläche, links
- 104: Anschlag, vorn
- 105: Anschlag, hinten; Keilrückseite
- 106: Schubstange, Antriebselement
- 107: Schraube
- 108: Teller
- 109: Schraube

- 110: Käfig
- 111: Anschlag, vorn
- 112: Anschlag, hinten; Boden von (116)
- 113: Führungsstege für (71)
- 115: Durchgangskanal
- 116: Schiebekeilausnehmung
- 117: Querbohrung
- 119: Zylinderrollen

- 121: Reibgehemme, rechts
- 122: Reibbacke
- 131: Reibgehemme, links
- 132: Reibbacke

- 151: Koppelelement, Querschieber
- 152: Quernut in (10)

## Patentansprüche

1. Vorrichtung zum Bremsen, Klemmen oder Greifen mit mindestens einem eine Hubbewegung erzeugenden Antrieb,
- wobei der Antrieb mindestens eine Antriebsvorrichtung und mindestens zwei in einem Gehäuse (10) angeordnete Schiebekeilgetriebe (70, 100) umfasst,
- wobei das erste Schiebekeilgetriebe (70) eine Wegübersetzung hat, die kleiner ist als die Wegübersetzung des zweiten Schiebekeilgetriebes (100),
- wobei das erste Schiebekeilgetriebe (70) aus einem Folgekeil (71) und einem Schrägdruckstück (81) besteht,
- wobei sich der Folgekeil (71) in Einkeilrichtung (89) federbelastet am Gehäuse (10) abstützt,
- wobei das zweite Schiebekeilgetriebe (70) einen zwischen einem Stützelement (85) und dem Folgekeil (71) in Einkeilrichtung (89) bewegbaren Antriebskeil (101) umfasst,
- wobei der Antriebskeil (101) den Folgekeil (71) direkt oder über mindestens einen in einem Käfig (110) geführten Wälzkörper (119) kontaktiert,
- wobei während der Relativbewegung von Folgekeil (71) und Schrägdruckstück (81) der Hub des Folgekeils (71) durch einen am Antriebskeil (101) oder bei der Verwendung des Käfigs (110) durch einen am Käfig (110), der anschlagsbedingt den Antriebskeil (101) in Einkeilrichtung (89) nicht überholen kann, angeordneten Anschlag (104, 111) begrenzt ist.

2. Vorrichtung gemäß Anspruch 1, **dadurch gekennzeichnet, dass** die Übersetzung des zweiten Schiebekeilgetriebes (100) um mindestens 33 Prozent größer ist als die des ersten Schiebekeilgetriebes (70).

3. Vorrichtung gemäß Anspruch 1, **dadurch gekennzeichnet, dass** das erste Schiebekeilgetriebe (70) einen Keilwinkel hat, der zwischen 2 und 10 Winkelgraden liegt, wobei das zweite Schiebekeilgetriebe (100) einen Keilwinkel hat, der zwischen 0,4 und 1,5 Winkelgraden liegt.

4. Vorrichtung gemäß Anspruch 1, **dadurch gekennzeichnet, dass** das erste Schiebekeilgetriebe (70) ein Gleitschiebekeilgetriebe ist, während das zweite Schiebekeilgetriebe (100) ein Wälzschiebekeilgetriebe ist.

5. Vorrichtung gemäß Anspruch 1, **dadurch gekennzeichnet, dass** sich der Folgekeil (71) in Einkeilrichtung (89) mittels einer Schraubendruckfeder (78) am Gehäuse (10) abstützt.

6. Vorrichtung gemäß Anspruch 1, **dadurch gekennzeichnet, dass** der Käfig (110) beide Schiebekeile (71, 101) zumindest partiell umgreift.

7. Vorrichtung gemäß Anspruch 1, **dadurch gekennzeichnet, dass** das Stützelement (85) das Gehäuse (10) oder ein Einstelldeckel ist.

8. Vorrichtung gemäß Anspruch 1, **dadurch gekennzeichnet, dass** sie mindestens ein bewegliches Klemm- oder Greifelement (81) aufweist, das dem ersten Schiebekeilgetriebe (70) nachgeordnet ist, wobei das Klemm- oder Greifelement (81) an einer Führungsschiene (7) oder einem Werkstück durch gegenseitige Relativbewegungen klemmend oder greifend anlegbar ist.

9. Vorrichtung gemäß Anspruch 1, **dadurch gekennzeichnet, dass** die Antriebsvorrichtungen Zylinder-Kolben-Einheiten, Elektromagnete, elektromechanische Antriebe, piezoelektrische Antriebe oder thermische Gedächtnismetallantriebe sind.

## Claims

1. Apparatus for braking, clamping or gripping, said apparatus including at least one drive assembly producing stroke movements, with
- said drive assembly comprising at least one drive and at least two shifting-wedge-type transmission means (70, 100) disposed in a housing (10), the first shifting-wedge-type transmission (70) having a lower travel transmission ratio than the second shifting-wedge-type transmission (100),
- the first shifting-wedge-type transmission (70) comprising a follower wedge (71) and a sloped pressing piece (81),
- the follower wedge (71) supported on and against housing (10) and spring biased into the wedge actuating direction (89),
- the second shifting-wedge-type transmission (100) comprising a driver wedge (101) movable in the wedge actuating direction between a support element (85) and follower wedge (71), and
- the driver wedge (101) contacting the follower wedge (71) directly or via at least one rolling-motion member (119) guided in a cage (110),
- with the stroke of follower wedge (71) being limited, during the relative movement of the follower wedge (71) and the sloped pressing piece (81), by a stop member (104, 111) on driving wedge (10) or - if a cage (110) is used - attached to cage (110), which the stop feature keeps said cage from overtaking the driver wedge (101) in the wedge actuating direction (89).

2. Apparatus as claimed in claim 1, **characterized in that** the transmission ratio of the second shifting-wedge transmission (100) is at least 33 percent higher than the transmission ratio of the first shifting-wedge transmission (70).

3. Apparatus as claimed in claim 1, **characterized in that** the first shifting-wedge transmission (70) is sloped between 2 and 10 angular degrees, with the second shifting-wedge transmission (100) being sloped between 0.4 and 1.5 angular degrees.

4. Apparatus as claimed in claim 1, **characterized in that** the first shifting-wedge transmission (70) is a slidingwedge-type transmission while the second shifting-wedge transmission (100) is a rolling-motion-type shifting-wedge transmission.

5. Apparatus as claimed in claim 1, **characterized in that** the follower wedge (71) is supported on and acts against housing (10) in the wedge actuating direction (89) by means of a helical compression spring (78).

6. Apparatus as claimed in claim 1, **characterized in that** both shifting wedges (71, 101) are enclosed at least partially by cage (110).

7. Apparatus as claimed in claim 1, **characterized in that** the supporting member (85) comprises housing (10) or an adjustable closure member.

8. Apparatus as claimed in claim 1, **characterized in** comprising at least one movable clamping or gripping element (81) disposed to act downstream of first shifting-wedge-type transmission (70), said clamping or gripping element (81) adapted to clampingly or grippingly engage a guide rail (7) or a workpiece by oppositely directed relative movement.

9. Apparatus as claimed in claim 1, **characterized in that** said drive means comprise piston-cylinder units, electromagnets, electromechanical drives, piezoelectric drives or thermally activated memory-metal drives.

## Revendications

1. Dispositif de freinage, de serrage ou de préhension équipé au moins d'un système d'entraînement produisant un mouvement de levage,
- le système d'entraînement comprenant au moins un dispositif d'entraînement et au moins deux engrenages à clavette (70, 100) coulissante qui sont placés dans un boîtier (10),
- le premier engrenage à clavette coulissante (70) ayant un rapport de multiplication plus petit que le rapport de multiplication du deuxième engrenage à clavette coulissante (100),
- le premier engrenage à clavette coulissante (70) comprenant une clavette entraînée (71) et un élément oblique de pression (81),
- la clavette entraînée (71) s'appuyant contre le boîtier (10) sous la contrainte d'un ressort dans la direction d'actionnement (89),
- le deuxième engrenage à clavette coulissante (100) comprenant une clavette d'entraînement (101) qui peut se déplacer dans la direction d'actionnement, entre un élément d'appui (85) et la clavette entraînée (71),
- la clavette d'entraînement (101) entrant en contact avec la clavette entraînée (71), directement ou par l'intermédiaire d'au moins un corps roulant (119) guidé dans une cage (110),
- la course de la clavette entraînée (71) étant limitée, pendant le mouvement relatif de la clavette entraînée (71)
- et de l'élément oblique de pression (81), par une butée (104, 111) placée sur la clavette d'entraînement (101) ou, lorsque la cage (110) est utilisée, sur la cage (110) qui ne peut dépasser la clavette d'entraînement (110) dans la direction d'actionnement (89) en raison de cette butée.

2. Dispositif selon la revendication 1, **caractérisé en ce que** la multiplication du deuxième système d'entraînement à clavette coulissante (100) est plus grande d'au moins 33 pourcent que celle du premier système d'entraînement à clavette coulissante (70).

3. Dispositif selon la revendication 1, **caractérisé en ce que** le premier engrenage à clavette coulissante (70) a un angle de coin entre 2 et 10 degrés, alors que le deuxième engrenage à clavette coulissante (100) a un angle de coin entre 0,4 et 1,5 degrés.

4. Dispositif selon la revendication 1, **caractérisé en ce que** le premier engrenage à clavette coulissante (70) est un réducteur harmonique, alors que le deuxième engrenage à clavette coulissante (100) est un engrenage muni de coins à roulement.

5. Dispositif selon la revendication 1, **caractérisé en ce que** la clavette entraînée (71) s'appuie contre le boîtier (10) par l'intermédiaire d'un ressort hélicoïdal de compression (78) dans la direction d'application (89).

6. Dispositif selon la revendication 1, **caractérisé en ce que** la cage (110) entoure les deux engrenages à clavette coulissante (71, 101) au moins partiellement.

7. Dispositif selon la revendication 1, **caractérisé en ce que** l'élément d'appui (85) est le boîtier (10) ou un couvercle de réglage.

8. Dispositif selon la revendication 1, **caractérisé en ce qu'**il présente au moins un élément mobile de serrage ou de préhension (81) qui est disposé derrière le premier engrenage à clavette coulissante (70), l'élément de serrage ou de préhension (81) pouvant s'appliquer contre un rail de guidage (7) ou une pièce à usiner, par des mouvements relatifs réciproques, par serrage ou par accrochage.

9. Dispositif selon la revendication 1, **caractérisé en ce que** les dispositifs d'entraînement sont des unités cylindre-piston, des aimants électromagnétiques, des entraînements électromécaniques, des entraînements piézoélectriques ou des entraînements métalliques à effet mémoire thermique.
